Europäisches Patentamt

European Patent Office

Office européen des brevets

(11) Publication number: **0 244 007 B1**

# EUROPEAN PATENT SPECIFICATION

(45) Date of publication of patent specification: **18.03.92** (51) Int. Cl.⁵: **A01F 12/24**

(21) Application number: **87200676.2**

(22) Date of filing: **10.04.87**

(54) **Integrally mounted positionable concave extension.**

(30) Priority: **01.05.86 US 858159**

(43) Date of publication of application:
**04.11.87 Bulletin 87/45**

(45) Publication of the grant of the patent:
**18.03.92 Bulletin 92/12**

(84) Designated Contracting States:
**DE FR GB**

(56) References cited:
EP-A- 0 085 358    AU-B- 1 236 370
DE-A- 1 130 641    FR-A- 676 217
FR-A- 793 982    FR-A- 847 078
FR-A- 1 074 372    FR-A- 1 479 557
GB-A- 997 650    US-A- 4 004 404

(73) Proprietor: **FORD NEW HOLLAND, INC. (a Delaware corp.)**
**500 Diller Avenue**
**New Holland Pennsylvania 17557(US)**

(72) Inventor: **Strong, Russell W.**
**Eeckhoutstraat 2**
**B-8000 Brugge(BE)**

(74) Representative: **Vandenbroucke, Alberic T.J.**
**FORD NEW HOLLAND N.V. Leon Claeysstraat 3A**
**B-8210 Zedelgem(BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates generally to axial flow combines and, more particularly, to a multipositionable concave extension mounted on the concave and cooperable with a threshing and separating rotor to optimally remove grain from crop material.

Concave extensions such as those found in US-A-4.004.404 and in US-A-4.031.901 and which are more specifically described in US-A-3.696.815, are utilized to supplement the threshing areas of the main concaves used in axial flow combines. Such concave extensions do not allow for different positions of the rub bars thereof for varying the crop threshing characteristics and do not move with the concaves when the concaves are positionally moved to a different setting relative to the threshing and separating rotors.

FR-A-847.078, on the other hand, is concerned with a so-called "conventional" (as opposed to "axial flow") threshing mechanism having a threshing cylinder and a threshing concave mounted circumferentially relative thereto. The threshing concave is pivotally mounted on the framework of the threshing machine to permit positional settings thereof relative to the cylinder to provide a variable spacing therebetween. A sub-assembly comprising a pair of concave extensions provided generally perpendicularly with respect to each other, is pivotally mounted on concave frame members generally at the inlet of the gap between the threshing cylinder and associated concave. This sub-assembly is rotatably positionable about a single pivot axis on the concave by a handle which itself can be affixed to the machine frame to secure this sub-assembly in any selected position. This arrangement permits placing either one of the concave extensions in an operative position for increasing the total effective surface of the concave while placing the other one of these concave extensions in a generally inoperative position. Under all circumstances, there is always a concave extension which is placed in an operative position even though this concave extension may be positioned either closer to or further away from the threshing cylinder dependent on the settings of the sub-assembly.

It is the object of the present invention to provide an axial flow type combine harvester with threshing concave means which permit adjustment for either increased threshing efficiency or reduced power consumption and reduced plugging risks.

According to the invention, an axial flow combine harvester is provided having at least one threshing and separating rotor including rasp bar assemblies cooperable with a circumferentially mounted concave and at least one concave extension which is detachably connectable relative to said concave; said concave having a pair of spaced apart frame members and being adjustably supported within the machine to permit positional settings thereof relative to the rotor to provide a variable spacing therebetween; said concave extension being selectively positionable relative to the concave in variable configurations with respect thereto and relative to the rotor; and said axial flow combine harvester

being characterized in that L:

- said concave extension is provided, generally at or adjacent its one end, with engagement means which are cooperable with, with respect to the rotor, generally radially spaced mounting members carried by each of said concave frame members in a manner to permit, on the one hand, selective radial positioning of said one end of said concave extension relative to the rotor and, on the other hand, a rotative movement of this concave extension relative to the concave frame members, and

- securing means are cooperably associated with, on the one hand, said concave extension generally at or adjacent a second end thereof and, on the other hand, at least one of said concave frame members in a manner to fix said second end of said concave extension in any one of a range of relative positions with respect to the concave.

Preferably, each mounting member is in the form of a pin mounted on a concave frame member and each engagement member is in the form of a clevis secured to the concave extension subframe assembly. The subframe assembly is also provided with a hole therein alignable with a plurality of openings in at least one of the concave frame members to permit the use of a fastener extending through said hole and one of the openings aligned therewith to fix the position of the concave extension relative to the concave frame members, thereby providing variable configurations of the rub bars on the concave extension relative to the rub bars of the concave. A filler plate is rotatably mounted to the forwardmost concave frame member and positionable relative to both this concave frame member and the concave extension. The concave extension and filler plate are easily positionable and/or removable by manipulation of two bolts interengaging the sub frame assembly and the respective concave frame members.

With the present invention a concave extension for an axial flow combine harvester is provided that mounts independently of the main frame of the combine harvester, yet is rigidly securable for use in a threshing mode, is variably positionable relative to the concave, is movable with the concave and is easily removable from the combine. Specifically a concave extension is provided which is integrally mounted on the concave frame members and thus is positionable with the concave for different concave settings. Yet this concave extension also is positionable relative to the concave to provide varying rub bar configurations such as to optimize the operating performance of the concave extension. The concave extension can be rigidly secured to the concave frame members to supplement the threshing area of the concave when in the threshing mode. Also different concave extensions can be utilized for different crop conditions to the extent that the concave extension can be easily and quickly removed from the concave and the combine by the manipulation of either only one or only two bolts.

In general the invention provides a concave extension for use in an axial flow combine that is durable in construction, inexpensive of manufacture, carefree of maintenance, facile in assemblage and simple and effective in use.

The advantages of this invention will become apparent upon consideration of the following detailed disclosure of the invention, especially when taken in conjunction with the accompanying drawings wherein:

Fig. 1 is a left side elevational view of a combine harvester incorporating the principles of the instant invention, a portion of the side sheet of the combine being broken away to reveal the threshing and separating rotor and associated concave housed therewithin;

Fig. 2 is a partial cross-sectional view of the threshing and separating area taken along lines 2-2 of Fig. 1 to show the relationships between the threshing and separating rotor and the concave and concave extension;

Fig. 3 is an enlarged exploded view of the forwardmost portion of the concave frame member to show the mounting of the concave extension and filler plate thereto;

Fig. 4 is an enlarged detail view of the concave extension mounting on the forwardmost concave frame member as seen in Fig. 2 with the concave extension in the thresh position;

Fig. 5 is an enlarged detail view similar to that of Fig. 4 with the concave extension in a swept position, the rotative movement of the filler plate being shown in phantom; and

Fig. 6 is an enlarged detail view similar to that seen in Figs. 4 and 5 with the concave extension in a withdrawn position.

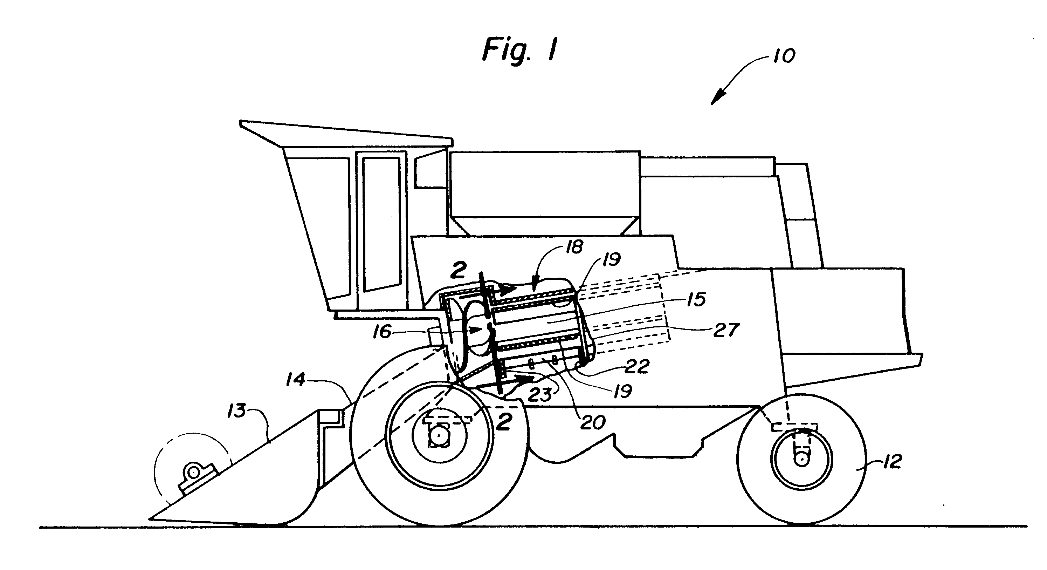

Referring now to the drawings and, particularly, to Fig. 1, a left side elevational view of a crop harvesting machine, commonly referred to as a combine harvester, incorporating the principles of the instant invention can be seen. Any left and right references are used as a matter of convenience and are determined by standing at the rear of the machine and facing in the direction of operative travel. Any foreward, rearward, upper, lower etc. references equally are used as a matter of convenience and thus should be considered not to be limiting. The combine harvester 10 includes a wheeled frame 12 to permit movement of the combine over the ground G. A header 13 is supported from the frame 12 forwardly of the combine 10 to receive standing crop material from the ground G and convey it rearwardly into a feeder house structure 14 that is operable to convey a flow of crop material into the infeed area 16 of the threshing and separating rotors 15. The crop material is fed between the rotors 15 and the corresponding concaves 20 where rasp bar assemblies 19 thresh the crop against the concaves 20 within the threshing area 18. The harvesting operation of such an axial flow combine is well known in the art and is described, for example, in US-A-3.916.912. While that the combine harvester shown in the drawings is of the twin rotor axial flow type, it will be clear to one skilled in the art that the instant invention is equally applicable to a single rotor axial flow combine harvester. It also will be appreciated that, while the following description basically is directed to the concave extension associated with the left hand threshing rotor 15, this description also applies to the concave extension associated with the right hand threshing rotor 15.

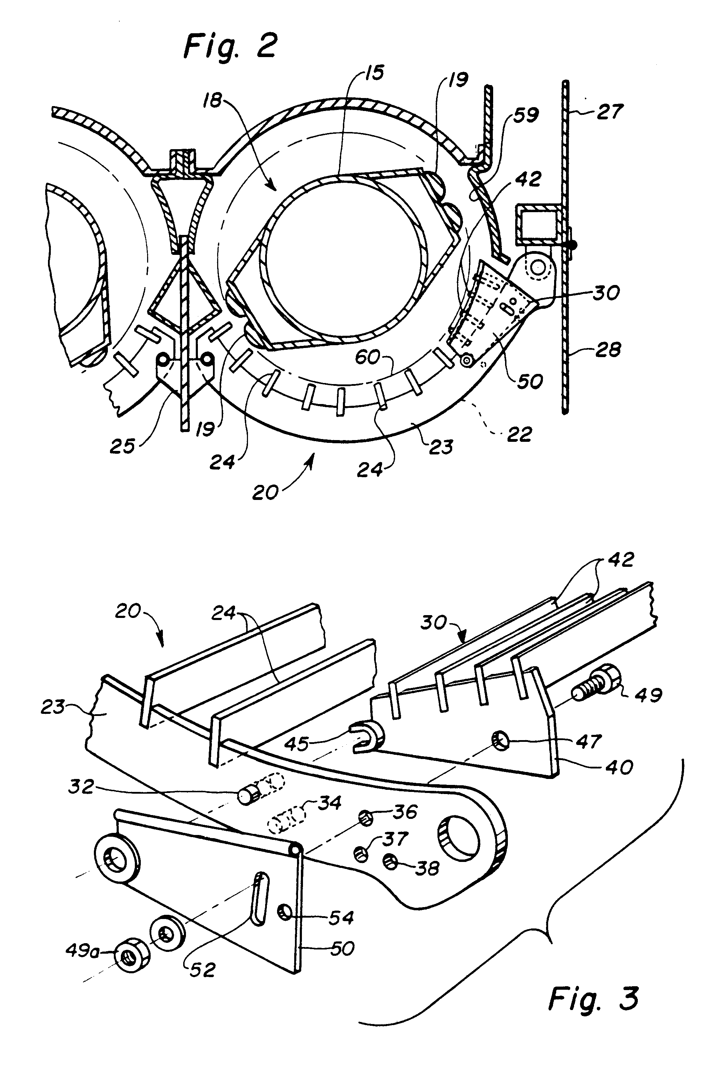

Referring now to Figs. 2 and 3, the structural details of one of the concave extensions 30 can best be seen; the other concave extension being either identical or at least very similar to the one shown in the drawings. The partial cross-sectional view of Fig. 2 best shows the positional relationships between the left hand threshing and separating rotor 15 and the associated concave 20. The concave 20 is provided with arcuate frame members 22, 23 supporting a plurality of fore-and-aft extending rub bars 24 cooperable with the rasp bar assemblies 19 mounted on the rotor 15 to separate the grain from crop material as noted above. The concaves 20 are mounted on a sub frame assembly 25 that is adjustable to permit positional settings of the concaves 20 relative to the rotors 15 to provide variable spacing between the rasp bar assemblies 19 and the rub bars 24. One type of adjustable concave support which is equally applicable to the apparatus shown in Figs. 1 and 2 is described in greater detail in US-A-4.375.221, the description portions of which are hereby incorporated by reference.

The concave extensions 30 are mounted between two longitudinally spaced concave frame members 22, 23 adjacent the side sheets 27 of the combine harvester 10. Access to the concave extensions 30 can be gained through the access doors 28 on the respective side sheets 27. The mounting of a concave extension 30 to a forwardmost concave frame member 23 is shown in the exploded view of Fig. 3. The mounting of the concave extension 30 to the rearwardly spaced concave frame member 22 is substantially identical to that shown with respect to the forwardmost frame member 23 in Fig. 3. and therefore will not be described separately hereafter.

The forwardmost concave frame member 23 is provided with a first mounting pin 32 which projects fore-and-aft of the frame member 23 for reasons to be described in greater detail below. The forwardmost frame member 23 also includes a second mounting pin 34 spaced radially outwardly with respect to the rotor 15 from the first mounting pin 34. The forwardmost frame member 23 is also provided with a number of openings 36,37,38 therethrough to be utilized as a securing means also described in greater detail below.

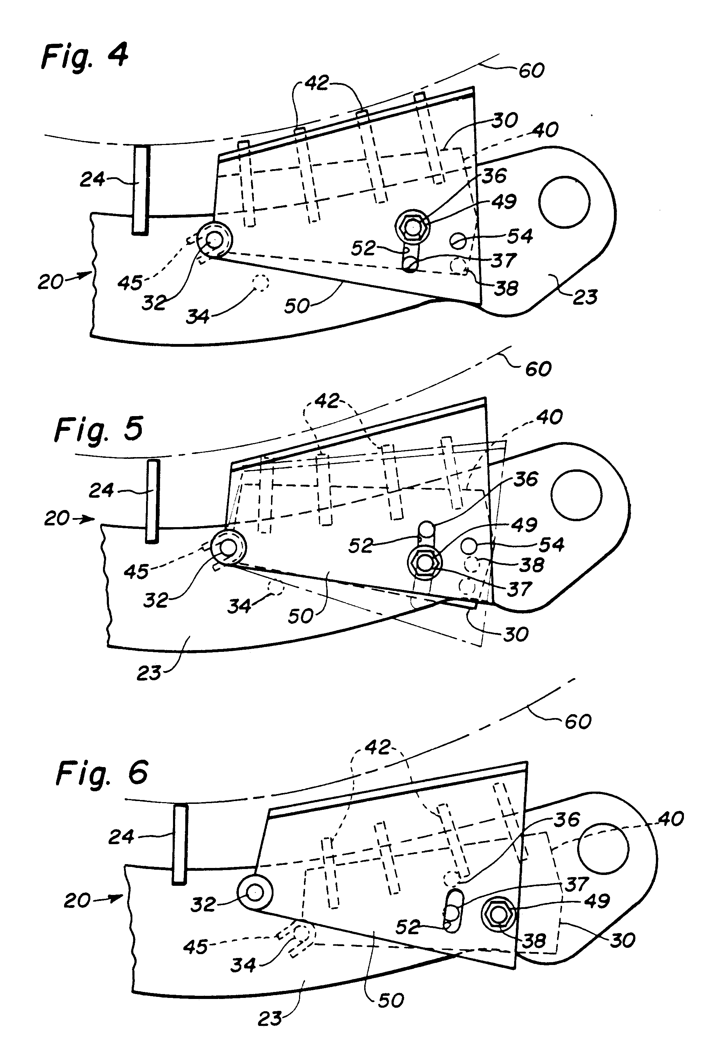

Each concave extension 30 is comprised of a sub frame assembly 40 supporting a number of longitudinally mounted rub bars 42 positioned in a parallel fashion similar to the concave rub bars 24. Each sub frame assembly 40 is equipped, at both its forward and rearward ends, with a clevis 45 of a size to be engageable with a corresponding one of the mounting pins 32,34 to permit rotational movement of said sub frame 40 relative to the corresponding concave frame members 22,23. Each sub frame assembly 40 is also provided with holes 47 extending therethrough to be alignable with corresponding openings 36,37,38 in the concave frame members 22,23 when the clevis 45 are mounted on respective ones of the mounting pins 32,34 as is described with respect to Figs. 4-6 below. A fastener 49 is interengageable with each hole 47 and a corresponding one of the aligned openings 36,37,38 to positionally fix the extension 30 relative to the concave frame members 22,23. Each nut portion 49a could be in the form of a series of nuts (not shown) welded to the respective frame members 22,23 at the openings 36,37,38 if the filler plate 50 were not used.

A filler plate 50 is mounted on the first mounting pin 32 forwardly of each forwardmost concave frame member 23 to be rotatable thereon relative to both the forwardmost concave frame member 23 and the concave extension 30. Each filler plate 50 is provided with a slotted hole 52 alignable with the openings 36,37 in the corresponding forwardmost frame member 23 so as to be engageable with the fastener 49 to fix the rotative position of each filler plate 50 relative to the corresonding concave extension 30 as desired. Each filler plate 50 is also provided with a second hole 54 therethrough to be alignable with the third opening 38 in the corresponding concave frame member 23 to positionally fix the filler plate 50 against this forwardmost frame member 23 when the concave extension 30 is in its withdrawn position as described with respect to Fig. 6 below.

The positional movements of each concave extension 30 and associated filler plate 50 are best shown in Figs. 4-6. The thresh position of the left hand concave extension 30 is shown in Fig. 4. The clevis 45 are mounted on the respective corresponding first mounting pins 32 while that the holes 47 are aligned with the respective corresponding first openings 36 and locked into position by the fasteners 49 to position this concave extension 30 in close proximity to the rasp bar assemblies 19 similar to the rub bars 24 of the concave 20. The path of movement of the periphery of the rasp bar assemblies 19 is depicted by the arcuate line 60. In the position depicted in Fig. 4, the concave extension 30 operates as an additional threshing area for the concave 20 and provides supplemental threshing action for the rotor 15. The filler plate 50 is locked in its uppermost position to block the front of the concave extension 30 in a similar manner as the forwardmost frame member 23 does with the rub bars 24.

The swept position for the left hand concave extension 30 is depicted in Fig. 5. The clevis 45 are again mounted on the corresponding first mounting pins 32. However, the holes 47 now are aligned with the lower openings 37 to rotatably drop this concave extension 30 in a position extending almost tangentially to the path of travel 60 of the rasp bar assemblies 19. The filler plate 50 can be adjusted in the manner shown in phantom in Fig. 5. The operation of the concave extension 30 in this swept position provides partial threshing but also provides a transition mode between the concaves 20 and the rotor covers 59 which are positioned radially outwardly with respect to the rotors 15 further than the concaves 20 as can be seen in Fig. 2. This particular configuration has been found to reduce plugging and to provide good separation in certain crop conditions where it is advantageous for the rotors 15 to provide a sweeping action to the rub bars 42 in the concave extensions 30.

Each concave extension 30 is also positionable in a withdrawn position as shown in Fig. 6. The clevis 45 are mounted on the corresponding second mounting pins 34 and the holes 47 are aligned with the corresponding third openings 38 to further drop this concave extension 30 away from the rasp bar assemblies 19. The filler plate 50 is positioned with the fastener 49 extending through the second hole 54 to lock this filler plate 50 in its shown rotated position which provides a transition from the infeed portion 16 of the corresponding threshing and separating rotor 15. By placing the concave extensions 30 in this withdrawn position, the rotors 15 can be operated at a minimum power consumption.

By mounting the concave extensions 30 directly to the concave frame members 22,23, the concave extensions 30 are positionally set with the concaves 20 by the support subframe 25 whenever a variable setting relative to the rasp bar assemblies 19 is desired. A removal of two bolts, one each engaging the forwardmost concave frame member 23 and the rearwardly spaced frame member 22, permits a quick positioning of each concave extension to any one of the three positions described above. Access to the concave extensions 30 can be easily gained through the access doors 28 in the combine side sheets 27 to affect servicing and/or removal of the concave extensions 30.

Having described so far the preferred embodiment of the invention, it will be appreciated by one skilled in the art that, in case the combine harvester is of the single rotor axial flow type, a concave extension in accordance with the instant invention may be provided either at only one transverse side or at both transversely opposite sides of the concave circumferentially mounted relative to the single axial flow threshing and separating rotor. Alternatively, in case the axial flow combine harvester is of the twin rotor type, a concave extension according to the invention may be provided at the outboard transverse side of each side-by-side extending concave.

## Claims

1. An axial flow combine harvester (10) having at least one threshing and separating rotor (15) including rasp bar assemblies (19) cooperable with a circumferentailly mounted concave (20) and at least one concave extension (30) which is detachably connectable to said concave (20); said concave (20) having a pair of spaced apart frame members (22, 23) and being adjustably supported within the machine to permit positional settings thereof relative to the rotor (15) to provide a variable spacing therebetween; said concave extension (30) being selectively positionable relative to the concave (20) in variable configurations with respect thereto and relative to the rotor (15); and said axial flow combine harvester (10)
    being characterized in that :
    - said concave extension (30) is provided, generally at or adjacent its one end, with engagement means (45) which are cooperable with, with respect to the rotor (15), generally radially spaced mounting members (32, 34) carried by each of said concave frame members (22, 23) in a manner to permit, on the one hand, selective radial positioning of said one end of said concave extension (30) relative to the rotor (15) and, on the other hand, a rotative movement of this concave extension (30) relative to the concave frame members (22, 23), and
    - securing means (36, 37, 38, 47, 49, 49a) are cooperably associated with, on the one hand, said concave extension (30) generally at or adjacent a second end thereof and, on the other hand, at least one of said concave frame members (22, 23) in a manner to fix said second end of said concave extension (30) in any one of a range of relative positions with respect to the concave (20).

2. A combine harvester according to claim 1 characterized in that :
    - the concave (20) has a plurality of rub bars (24) mounted between said pair of concave frame members (22, 23) and said concave extension (30) has a number of rub bars (42) mounted in a subframe assembly (40); and
    - the engagement means comprise a pair of spaced apart engagement members (45) secured to the subframe assembly (40); each of said engagement members (45) being rotatably engageable with each of the corresponding mounting members (32, 34) in a manner to permit both said rotatative movement of said concave extension (30) and said selective radial positioning of said one end of this concave extension (30) such that the concave extension rub bars (42) are positionable, as a unit, in a range of variable configurations with respect to the concave rub bars (24).

3. A combine harvester according to claim 2 characterized in that the mounting members are in the form of mounting pins (32, 34) mounted on the respective concave frame members (22, 23) and the engagement members are in the form of clevis (45) secured to the concave extension subframe assembly (40).

4. A combine harvester according to claim 3 characterized in that the mounting pins (32, 34) extend in the fore-and-aft direction of the harvester and at the sides of the respective concave frame members (22, 23) facing each other such that the concave extension (30) is selectively positionable inbetween said concave frame members (22, 23) via supportive engagement of each clevis (45) with any one of the corresponding mounting pins (32, 34).

5. A combine harvester according to any of the preceding claims characterized in that the securing means (36, 37, 38, 47, 49, 49a) comprise :
   - a number of spaced apart openings (36, 37, 38) provided in at least one of the concave frame members (22, 23);
   - at least one hole (47) extending through the concave extension subframe assembly (40); said at least one hole (47) being alignable with any one of said openings (36, 37, 38) in said at least one concave frame member (22, 23) when each said engaging member (45) is engaged with any one of the corresponding mounting members (32, 34); and
   - fastener means (49) interengageable with said hole (47) and any one of said corresponding openings (36, 37, 38) when aligned therewith to fix the rotative position of said concave extension (30) relative to the concave (20).

6. A combine harvester according to any of the preceding claims characterized in that
   a filler plate (50) is mounted to the forwardmost concave frame member (23) proximate to said concave extension (30); said filler plate (50) being adjustably positionable relative to said forwardmost concave frame member (23) and to said concave extension (30).

7. A combine harvester according to claim 6 when appended to claim 5 characterized in that the filler plate (50) is rotatably mounted on one of said mounting members (32, 34) associated with the forwardmost concave frame member (23) and has a slotted hole (52) therein which is engageable with said fastener means (49) to selectively fix the rotated position of said filler plate (50) relative to said forwardmost concave frame member (23).

8. A combine harvester according to claim 7 characterized in that one of the mounting members (32, 34) associated with the forwardmost concave frame member (23) extends on both sides of said concave frame member (23) to permit the filler plate (50) to be mounted on the opposing side of said concave frame member (23) from said subframe assembly (40); said filler plate (50) being mounted forwardly of said concave frame member (23) and said subframe assembly (40) being mounted rearwardly of said concave frame member (23) and between said spaced apart concave frame members (22, 23).

9. A combine harvester according to any of the preceding claims characterized in that the combine harvester is of the single rotor axial flow type and has a concave extension (30) circumferentially mounted relative to the single threshing and separating rotor (15) on either transverse side of the concave (20).

10. A combine harvester according to any of the claims 1 to 8 characterized in that the combine harvester is of the twin rotor axial flow type and has a concave extension (30) associated with each of the concaves (20); said concave extensions (30) being circumferentially mounted relative to the side-by-side extending threshing and separating rotors (15) at the transverse outboard sides of said concaves (20).

**Revendications**

1. Moissonneuse-batteuse à écoulement axial (10) comportant au moins un rotor de battage et de séparation (15) pourvu d'ensembles de battes (19) aptes à coopérer avec un contre-batteur monté circonférentiellement (20) et au moins un prolongement de contre-batteur (30) apte à être relié d'une manière détachable audit contre-batteur (20) ; ledit contre-batteur (20) possédant deux éléments d'armature espacés l'un de l'autre (22, 23) et étant supporté d'une manière ajustable à l'intérieur de la machine pour pouvoir être réglé quant à sa position par rapport au rotor (15), afin de définir un écartement variable entre eux ; ledit prolongement de contre-batteur (30) pouvant être positionné sélectivement par rapport au contre-batteur (20) suivant des configurations variables vis-à-vis de celui-ci et par rapport au rotor (15) : et ladite moissonneuse-batteuse à écoulement axial (10)
   étant caractérisée en ce que :
   - ledit prolongement de contre-batteur (30) est pourvu, d'une manière générale, au niveau ou à proximité de sa première extrémité, de moyens d'accouplement (45) aptes à coopérer avec des organes de montage (32, 34) espacés sensiblement radialement par rapport au rotor (15) et portés par lesdits éléments d'armature de contre-batteur (22, 23) respectifs de manière à permettre, d'une part, un positionnement radial sélectif de ladite première extrémité dudit prolongement de contre-batteur (30) par rapport au rotor (15) et, d'autre part, un mouvement de pivotement de ce prolongement de contre-batteur (30) par rapport aux éléments d'armature de contre-batteur (22, 23), et

- des moyens d'assujettissement (36, 37, 38, 47, 49, 49a) sont associés d'une manière coopérante, d'une part, avec ledit prolongement de contre-batteur (30), sensiblement au niveau ou à proximité d'une seconde extrémité de celui-ci et, d'autre part, avec l'un au moins desdits éléments d'armature de contre-batteur (22, 23), afin de fixer ladite seconde extrémité dudit prolongement de contre-batteur (30) dans l'une quelconque d'une plage de positions relatives par rapport au contre-batteur (20).

2.  Moissonneuse-batteuse selon la revendication 1, caractérisée en ce que :
    - le contre-batteur (20) comporte plusieurs barres de frottement (24) montées entre lesdits deux éléments d'armature de contre-batteur (22, 23), tandis que ledit prolongement de contre-batteur (30) comporte un certain nombre de barres de frottement (42) montées dans un ensemble formant sous-châssis (40) ; et
    - les moyens d'accouplement comportent deux organes d'accouplement espacés l'un de l'autre (45) assujettis à l'ensemble formant sous-châssis (40) ; chacun desdits organes d'accouplement (45) étant apte a être accouplé d'une manière pivotante avec chacun des organes de montage (32, 34) correspondants de manière à permettre aussi bien ledit mouvement de pivotement dudit prolongement de contre-batteur (30) que ledit positionnement radial sélectif de ladite première extrémité de ce prolongement de contre-batteur (30), afin que les barres de frottement de prolongement de contre-batteur (42) puissent être positionnées d'un seul bloc dans une plage de configurations variables par rapport aux barres de frottement de contre-batteur (24).

3.  Moissonneuse-batteuse selon la revendication 2, caractérisée en ce que les organes de montage se présentent sous la forme de broches de montage (32, 34) montées sur les éléments d'armature de contre-batteur (22, 23) respectifs, tandis que les organes d'accouplement se présentent sous la forme d'étriers (45) assujettis à l'ensemble formant sous-châssis de prolongement de contre-batteur (40).

4.  Moissonneuse-batteuse selon la revendication 3, caractérisée en ce que les broches de montage (32, 34) s'étendent dans le sens longitudinal de la moissonneuse et au niveau des côtés des éléments d'armature de contre-batteur (22, 23) respectifs qui se font face mutuellement, de façon que le prolongement de contre-batteur (30) puisse être positionné sélectivement entre lesdits éléments d'armature de contre-batteur (22, 23) grâce à l'accouplement de support de chacun des étriers (45) avec l'une quelconque des broches de montage (32, 34) correspondantes.

5.  Moissonneuse-batteuse selon l'une quelconque des revendications précédentes, caractérisée en ce que les moyens d'assujettissement (36, 37, 38, 47, 49, 49a) comportent :
    - un certain nombre d'orifices espacés les uns des autres (36, 37, 38) définis dans l'un au moins des éléments d'armature de contrebatteur (22, 23) ;
    - au moins un trou (47) traversant l'ensemble formant sous-châssis de prolongement de contre-batteur (40) ; ledit trou (47) pouvant être aligné avec l'un quelconque desdits orifices (36, 37, 38) définis dans ledit élément d'armature de contre-batteur (22, 23), lorsque chacun des organes d'accouplement (45) est accouplé avec l'un quelconque des organes de montage (32, 34) correspondants ; et
    - des moyens de fixation (49) aptes à être accouplés mutuellement avec ledit trou (47) et l'un quelconque desdits orifices (36, 37, 38) correspondants, lorsqu'ils sont alignés avec ceux-ci, afin de fixer la position de pivotement dudit prolongement de contre-batteur (30) par rapport au contre-batteur (20).

6.  Moissonneuse-batteuse selon l'une quelconque des revendications précédentes, caractérisée en ce qu'il est prévu une plaque de garnissage (50) montée sur l'élément d'armature de contre-batteur extrême avant (23), à proximité dudit prolongement de contre-batteur (30) : ladite plaque de garnissage (50) pouvant être positionnée d'une manière ajustable par rapport audit élément d'armature de contre-batteur extrême avant (23) et audit prolongement de contre-batteur (30).

7. Moissonneuse-batteuse selon la revendication 6, lorsque celle-ci est dépendante de la revendication 5, caractérisée en ce que la plaque de garnissage (50) est montée pivotante sur l'un desdits organes de montage (32, 34) associés à l'élément d'armature de contre-batteur extrême avant (23) et comporte, défini en elle, un trou oblong (52) apte à être accouplé avec lesdits moyens de fixation (49) pour fixer sélectivement la position de pivotement de ladite plaque de garnissage (50) par rapport audit élément d'armature de contre-batteur extrême avant (23).

8. Moissonneuse-batteuse selon la revendication 7, caractérisée en ce que l'un des organes de montage (32, 34) associés à l'élément d'armature de contre-batteur extrême avant (23) s'étend des deux côtés dudit élément d'armature de contre-batteur (23) pour que la plaque de garnissage (50) puisse être montée sur le côté opposé dudit élément d'armature de contre-batteur par rapport audit ensemble formant sous-châssis (40) ; ladite plaque de garnissage étant montée vers l'avant dudit élément d'armature de contre-batteur (23), tandis que ledit ensemble formant sous-châssis (40) est monté à l'arrière dudit élément d'armature de contre-batteur (23) et entre lesdits éléments d'armature de contre-batteur espacés l'un de l'autre (22, 23).

9. Moissonneuse-batteuse selon l'une quelconque des revendications précédentes, caractérisée en ce que la moissonneuse-batteuse est du type à écoulement axial et à un seul rotor et comporte un prolongement de contre-batteur (30) monté circonférentiellement par rapport au rotor de battage et de séparation unique (15) sur l'un ou l'autre côté transversal du contre-batteur (20).

10. Moissonneuse-batteuse selon l'une quelconque des revendications 1 à 8, caractérisée en ce que la moissonneuse-batteuse est du type à écoulement axial et à double rotor et comporte un prolongement de contre-batteur (30) associé à chacun des contre-batteurs (20) ; lesdits prolongements de contre-batteurs (30) étant montés circonférentiellement par rapport aux rotors de battage et de séparation (15) qui s'étendent côte à côte, au niveau des côtés transversaux extérieurs desdits contre-batteurs (20).

**Patentansprüche**

1. Mähdrescher (10) mit axialem Materialfluß, mit zumindestens einem Dresch- und Trennrotor (15), mit Schlagleisten-Baugruppen (19), die mit einem in Umfangsrichtung befestigtem Dreschkorb (20) und zumindestens einer Dreschkorb-Verlängerung (30) zusammenwirken, die lösbar mit dem Dreschkorb (20) verbunden ist, wobei der Dreschkorb (20) zwei mit Abstand voneinander angeordnete Rahmenteile (22,23) aufweist und einstellbar im Inneren der Maschine gehaltert ist, um Positionseinstellungen des Dreschkorbes gegenüber dem Rotor (15) zu ermöglichen, damit sich ein veränderbarer Abstand zwischen diesen Teilen ergibt, während die Dreschkorbverlängerung (30) selektiv bezüglich des Dreschkorbes (20) auf veränderbare Konfigurationen bezüglich des Dreschkorbes und gegenüber dem Rotor (15) einstellbar ist, und wobei der Mähdrescher (10) mit axialer Materialströmung dadurch **gekennzeichnet** ist, daß:

- die Dreschkorb-Verlängerung (30) allgemein an oder benachbart zu ihrem einem Ende mit Eingriffseinrichtungen (45) versehen ist, die mit bezüglich des Rotors (15) allgemein mit radialem Abstand angeordneten Befestigungsteilen (32,34) zusammenwirken können, die von jedem der Dreschkorb-Rahmenteile (22,23) derart gehaltert sind, daß einerseits eine selektive radiale Positionierung des einen Endes der Dreschkorb-Verlängerung (30) gegenüber dem Rotor (15) und andererseits eine Drehbewegung dieser Dreschkorb-Verlängerung (30) gegenüber den Dreschkorb-Rahmenteilen (22,23) ermöglicht wird, und
- Befestigungseinrichtungen (36,27,38,47,49,49a) zusammenwirkend einerseits der Dreschkorb-Verlängerung (30) allgemein an oder benachbart zu dessen zweitem Ende und andererseits zumindestens einem der Dreschkorb-Rahmenteile (22,23) derart zugeordnet sind, daß das zweite Ende der Dreschkorb-Verlängerung (30) in irgendeiner eines Bereiches von Relativpositionen bezüglich des Dreschkorbes (20) festgelegt wird.

2. Mähdrescher nach Anspruch 1, dadurch **gekennzeichnet,** daß:
- der Dreschkorb (20) eine Vielzahl von Reibstangen (24) aufweist, die zwischen den beiden Dreschkorb-Rahmenteilen (22, 23) befestigt sind, während die Dreschkorb-Verlängerung (30) eine Anzahl von Reibstangen (42) aufweist, die in einer Hilfsrahmen-Baugruppe (40) befestigt sind, und

- die Eingriffseinrichtungen zwei mit Abstand angeordnete Eingriffsteile (45) umfassen, die an der Hilfsrahmen-Baugruppe (40) befestigt sind, wobei jedes der Eingriffsteile (45) drehbar mit jedem der entsprechenden Befestigungteile (32, 34) in Eingriff bringbar ist, um sowohl die Drehbewegung der Dreschkorb-Verlängerung (30) als auch die selektive radiale Positionierung des einen Endes dieser Mähdrescher-Verlängerung (30) derart zu ermöglichen, daß die Reibstangen (42) der Dreschkorb-Verlängerung als eine Einheit in einem Bereich von veränderlichen Konfigurationen bezüglich der Reibstangen (24) des Dreschkorbes positionierbar sind.

3. Mähdrescher nach Anspruch 2,
   dadurch **gekennzeichnet,** daß die Befestigungteile die Form von Befestigungsstiften (32,34) aufweisen, die an den jeweiligen Dreschkorb-Rahmenteilen (22,23) angeordnet sind, während die Eingriffsteile die Form von Bügeln (45) aufweisen, die an der Hilfsrahmen-Baugruppe (40) der Dreschkorb-Verlängerung befestigt sind.

4. Mähdrescher nach Anspruch 3,
   dadurch **gekennzeichnet,** daß sich die Befestigungsstifte (32,34) in der Längsrichtung des Mähdreschers und an den aufeinander gerichteten Seiten der jeweiligen Dreschkorb-Rahmenteile (22,23) derart erstrecken, daß die Dreschkorb-Verlängerung (30) selektiv zwischen den Dreschkorb-Rahmenteilen (22,23) über einen Abstützeingriff jedes Bügels (45) mit einem der entsprechenden Befestigungsstifte (32,34) einstellbar ist.

5. Mähdrescher nach einem der vorhergehenden Ansprüche, dadurch **gekennzeichnet,** daß die Befestigungseinrichtungen (36,37,38,47,49,49a) folgende Teile umfassen:
   - eine Anzahl von mit Abstand voneinander angeordneten Öffnungen (36,37,38), die zumindestens in einem der Dreschkorb-Rahmenteile (22,23) angeordnet sind,
   - zumindestens eine Bohrung (47), die sich durch die Hilfsrahmen-Baugruppe (40) der Dreschkorb-Verlängerung erstreckt, wobei die zumindestens eine Bohrung (47) mit einer beliebigen der Öffnungen (36,37,28) in dem zumindestens einem Dreschkorb-Rahmenteil (22,23) ausrichtbar ist, wenn jedes der Eingriffsteile (45) mit einem der entsprechenden Befestigungsteile (32,34) in Eingriff steht, und
- Befestigungsmittel (49), die mit der Bohrung (47) und irgendeiner der entsprechenden Öffnungen (36,37,38) bei deren Ausrichtung miteinander in Eingriff bringbar sind, um die Drehposition der Dreschkorb-Verlängerung (30) gegenüber dem Dreschkorb (20) festzulegen.

6. Mähdrescher nach einem der vorhergehenden Ansprüche, dadurch **gekennzeichnet,** daß eine Füllplatte (50) an dem vordersten Dreschkorb-Rahmenteil (23) in der Nähe der Dreschkorb-Verlängerung (30) befestigt ist, und daß die Füllplatte (50) einstellbar gegenüber dem vordersten Dreschkorb-Rahmenteil (23) und der Dreschkorb-Verlängerung (30) positionierbar ist.

7. Mähdrescher nach Anspruch 6 unter Rückbeziehung auf Anspruch 5, dadurch **gekennzeichnet,** daß die Füllplatte (50) drehbar an einem der dem vordersten Dreschkorb-Rahmenteil (23) zugeordneten Befestigungsteile (32,34) befestigt ist und eine in ihr ausgebildete geschlitzte Öffnung (32) aufweist, die mit den Befestigungsmitteln (49) in Eingriff bringbar ist, um selektiv die Drehposition der Füllplatte (50) gegenüber dem vordersten Dreschkorb-Rahmenteil (23) festzulegen.

8. Mähdrescher nach Anspruch 7,
   dadurch **gekennzeichnet,** daß sich das eine der dem vordersten Dreschkorb-Rahmenteil (23) zugeordenten Befestigungteile (32,34) auf beiden Seiten des Dreschkorb-Rahmenteils (23) erstreckt, so daß die Füllplatte (50) auf der der Hilfsrahmen-Baugruppe (40) gegenüberliegenden Seite des Dreschkorb-Rahmenteils (23) befestigbar ist, und daß die Füllplatte (50) vor dem Dreschkorb-Rahmenteil (23) befestigt ist, während die Hilfsrahmen-Baugruppe (40) hinter dem Dreschkorb-Rahmenteil (23) und zwischen den mit Abstand angeordneten Dreschkorb-Rahmenteilen (22,23) befestigt ist.

9. Mähdrescher nach einem der vorhergehenden Ansprüche, dadurch **gekennzeichnet,** daß der Mähdrescher vom Typ mit einem einzigen Rotor und axialem Materialfluß ist und eine Dreschkorb-Verlängerung (30) aufweist, die in Umfangsrichtung bezüglich des einzigen Dresch- und Trennrotors (15) auf einer Querseite des Dreschkorbes (20) befestigt ist.

10. Mähdrescher nach einem der Ansprüche 1 bis 8,
    dadurch **gekennzeichnet,** daß der Mähdrescher vom Typ mit zwei Rotoren und axialem Materialfluß ist und jedem der Dreschkörbe (20) zugeordnete Dreschkorb-Verlängerungen aufweist, und daß die Dreschkorb-Verlängerungen (30) in Umfangsrichtung bezüglich der sich Seite an Seite erstreckenden Dresch- und Trennrotoren (15) an den außenliegenden Querseiten der Dreschkörbe (20) befestigt sind.

Fig. 1

*Fig. 2*

*Fig. 3*

# Fig. 4

# Fig. 5

# Fig. 6